# EUROPÄISCHE PATENTSCHRIFT

(11) **EP 3 803 174 B1**
(45) Veröffentlichungstag und Bekanntmachung des Hinweises auf die Patenterteilung: **07.08.2024**
(21) Anmeldenummer: 19730099.9
(22) Anmeldetag: 21.05.2019
(51) Int. Cl.: F16L 5/00, F16L 5/02, G01N 1/22

(54) **ANSAUGPARTIKELERKENNUNGSSYSTEM MIT EINER WAND- ODER DECKENDURCHFÜHRUNG**
SUCTION PARTICLE DETECTION SYSTEM HAVING A WALL OR CEILING FEEDTHROUGH
SYSTÈME D'IDENTIFICATION DE PARTICULES ASPIRÉES COMPRENANT UNE TRAVERSÉE DE MUR OU DE PLAFOND

(30) Priorität: 24.05.2018 EP 18020228
(43) Veröffentlichungstag der Anmeldung: 14.04.2021
(73) Patentinhaber: Wagner Group GmbH, 30853 Langenhagen (DE)
(72) Erfinder: STEHR, Peter, 31515 Wunstorf (DE)
(74) Vertreter: Götz, Gudrun Veronika
(86) Internationale Anmeldenummer: PCT/EP2019/063122
(87) Internationale Veröffentlichungsnummer: WO 2019/224203

(56) Entgegenhaltungen:
- WO-A1-2012/176872
- WO-A1-93/23735
- WO-A2-2016/131855
- DE-A1- 102016 106 250
- FR-A3- 3 057 315

## Beschreibung

Die Erfindung betrifft eine Wand- oder Deckendurchführung zur fluidleitenden Verbindung eines Rohr- oder Schlauchendes eines Ansaugpartikelerkennungssystems, insbesondere eines Ansaugbranderkennungssystems, mit einer Prüfumgebung. Die Erfindung betrifft außerdem ein Ansaugpartikelerkennungssystem mit einer Wand- oder Deckendurchführung, die ein Rohr- oder Schlauchende des Ansaugpartikelerkennungssystems fluidleitend mit einer Prüfumgebung verbindet. Die Wand- oder Deckendurchführung ist ausgestattet mit einem Leitungsabschnitt, der ein erstes Leitungsende zur fluidleitenden Verbindung mit einem Rohr- oder Schlauchende des Ansaugpartikelerkennungssystems sowie ein dem ersten Leitungsende gegenüberliegend angeordnetes zweites Leitungsende aufweist, wobei das zweite Leitungsende mit einer Ansaugöffnung ausgebildet ist, einem Befestigungsmittel zur Fixierung der Wand- oder Deckendurchführung innerhalb einer Durchgangsöffnung einer wand- oder deckenartigen Raumstruktur und einem flanschartigen Kragenabschnitt, welcher sich ausgehend von dem zweiten Leitungsende in radialer Richtung erstreckt. Die Erfindung betrifft außerdem ein zugehöriges Montageverfahren und die Verwendung eines Befestigungsmittels zur Fixierung der Wand- oder Deckendurchführung.

Im Bereich Brandschutz ist neben der aktiven Brandbekämpfung eine frühzeitige Erkennung von Bränden oder deren Entstehung ein wichtiges Thema. Gerade in geschlossenen Bereichen, in welchen sich Personen aufhalten, bspw. in Räumen von Gebäuden oder im Fahrgastbereich von Zügen, aber auch in Räumen mit hochwertiger oder wichtiger Einrichtung, wie bspw. Serverräumen, ist eine Frühesterkennung eines Brandes, vorzugsweise bereits während dessen Entstehungsphase, von maßgeblicher Bedeutung.

Verwendung finden hierfür Ansaugpartikelerkennungssysteme, im Speziellen Rauchansaugsysteme, sogenannte Ansaugrauchmelder, welche ununterbrochen eine ausreichend repräsentative Luftmenge aus einer Prüfumgebung, dem zu überwachenden Raum oder Bereich, ansaugen und einem integrierten Detektor zuführen. Als Detektoren kommen beispielsweise Streulichtdetektoren, welche im Ansaugweg integriert sind und die durch Streu- oder Rauchpartikel in einem Streulichtzentrum des Detektors hervorgerufene Lichtstreuung wahrnehmen, oder auch punktförmige Rauchmelder zur Anwendung, welche die durch Rauchaerosole hervorgerufene Lichttrübung in einer Detektionskammer des Detektors messen. Ein probates Mittel zum Entnehmen der repräsentativen Luftmenge und zum Zuführen dieser zu dem Detektor ist ein Rohr- und/oder Schlauchsystem in der Gestalt von Rohr- und/oder Schlauchleitungen mit entsprechenden Komponenten wie Verbindungsstücken, Ventilen, Abzweigungen und/oder sonstigen Armaturen. Bspw. mittels eines Lüfters wird ein Unterdruck innerhalb des Rohr- und/oder Schlauchsystems erzeugt, sodass über sogenannte Ansaugpunkte, welche eine Ansaugöffnung aufweisen, Luftproben entnommen und zu dem Detektor geführt werden. Die Ansaugpunkte werden hierzu jeweils mit einem Rohr- oder Schlauchende verbunden, sodass deren Ansaugöffnungen an verschiedenen Positionen in den zu überwachenden Raum oder Bereich hineinragen und eine fluidleitende Verbindung zur Detektionskammer realisieren. Bei der Verbindung zwischen Rohr- oder Schlauchende und Ansaugpunkt ist auf eine ausreichende Dichtigkeit zu achten, damit keine Leckage-Ströme auftreten und die entnommene Luftmenge zuverlässig den Detektor erreicht.

Im Idealfall wird das Rohr- und/oder Schlauchsystem bereits während der Bauphase eines Gebäudes oder eines Verkehrsmittels, bspw. eines Zuges, baulich integriert, sodass die Leitungen nach Bauabschluss hinter den vorzugsweise die Prüfumgebung begrenzenden wand- oder deckenartigen Raumstrukturen, insbesondere hinter Wänden oder Decken, Wand- oder Deckenverkleidungen, sogenannten Zwischenwänden oder Zwischendecken verborgen sind. Damit die Entnahme der benötigten Luftmenge weiterhin möglich ist, sind den jeweiligen Ansaugöffnungen bspw. eine Wand- oder Deckenverkleidung durchsetzende Durchgangsöffnungen zugeordnet. Um die Rohr- oder Schlauchenden innerhalb der Durchgangsöffnungen zu fixieren, sind die Ansaugpunkte als Wand- oder Deckendurchführungen ausgebildet und weisen eine flanschartige, die Ansaugöffnung einfassende Abdeckung auf, welche im montierten Zustand an der Sichtseite der Wand- oder Deckenverkleidung anliegt und die Durchgangsöffnung kaschiert. Zweckmäßigerweise ist der Durchmesser der flanschartigen Abdeckung hierzu größer ausgebildet als der Durchmesser der Durchgangsöffnung, sodass diese nach der Montage vollständig abgedeckt ist. Zur Befestigung wird der Ansaugpunkt üblicherweise durch die Durchgangsöffnung geführt und mit einer rückseitig angeordneten Gegenmutter an der Wand- oder Deckenverkleidung befestigt. Hierzu benötigt der Monteur Zugriff zu beiden Seiten, zur Sichtseite und zur Rückseite, der Verkleidung, weshalb eine Montage stets in der Nähe von ausbaubaren Einbaulampen oder Revisionsklappen vorgesehen sein muss. Der Zugriff kann dann von dem zu überwachenden Raum ausgehend durch die Öffnung der ausgebauten Einbaulampe bzw. durch die Revisionsklappe hindurch zur Rückseite der Verkleidung hin erfolgen. Bei einem ausreichend großen Zwischenraum zwischen Decke oder Wand und jeweiliger Verkleidung kann sich der Monteur alternativ auch selbst in diesen Zwischenraum begeben und die Montage von dort aus vornehmen. Für beide alternativen Montageverfahren ist ein Zugang zur Rückseite der Wand- oder Deckenverkleidung obligatorisch.

Aus der WO 1993/23735 A1 sind Montagevorrichtungen für Ansaugpunkte eines Raucherkennungssystems bekannt. Zur Befestigung des Ansaugpunkts kann bei einer Ausführungsform ein Rückhaltemittel an einer Durchgangsbohrung mit der Rückseite oder alternativ mit der Sichtseite einer Wand- oder Deckenverkleidung verschraubt werden. Anschließend wird ein mit einem Außengewinde versehener Hohlstutzen durch die Durchgangsöffnung geführt und mit einem Innengewinde des Rückhaltemittels verschraubt. Der Hohlstutzen dient zur Aufnahme und Führung eines kapillaren Schlauchendes des Raucherkennungssystems. Der Ansaugpunkt selbst wird von der Sichtseite aus aufgesteckt, sodass eine Luftprobe ausgehend von dessen Ansaugöffnung über das kapillare Schlauchende zum Raucherkennungssystem geleitet werden kann. Um die Durchgangsbohrung zu verbergen und die Befestigung des Ansaugpunkts zu erleichtern, lässt sich der Hohlstutzen mit einer blütenförmigen Abdeckung ausstatten, welche beim Durchführen durch die Durchgangsbohrung an den Hohlstutzen angelegt ist und ausklappt, sobald der Hohlstutzen die Sichtseite der Wand- oder Deckenverkleidung erreicht. Die blütenförmige Verkleidung liegt dann, die Durchgangsbohrung abdeckend, an der Sichtseite der Wand- oder Deckenverkleidung an. Abschließend wird wiederum der Ansaugpunkt aufgesteckt. Nachteilig bei dieser Variante ist die Notwendigkeit, vor der eigentlichen Montage des Ansaugpunkts zunächst ein Rückhaltemittel mit der Wand- oder Deckenverkleidung zu verschrauben. Zudem muss der Hohlstutzen von der Rückseite der Wand- oder Deckenverkleidung ausgehend durch die Durchgangsbohrung geführt werden, damit die blütenförmige Abdeckung auf der anderen Seite, der Sichtseite, aufklappen kann. Schließlich umfassen die genannten Montagevorrichtungen eine Vielzahl verschiedener Teile, welche in jeweiligen Montageschritten miteinander verbunden werden müssen. Dies führt zu einem erhöhten Montage- und Herstellungsaufwand und zu einer jeweils höheren Fehleranfälligkeit.

Ein anderer Vorschlag zur Montage und Demontage von Ansaugpunkten in einem Ansaugpartikelerkennungssystem ist aus der WO 2016/131855 A2 bekannt. Ziel ist es hier, die Installation der Ansaugpunkte von der Sichtseite einer Verkleidung ausgehend vorzunehmen. Zur Befestigung des Ansaugpunkts wird ein Befestigungsmittel mit über ein Ratschenband stellbaren Befestigungszungen durch die Durchgangsöffnung der Verkleidung, auf deren Rückseite, geführt. Die Befestigungszungen erstrecken sich parallel zur Verkleidung und sind jeweils mit einem federnden Haltearm, welcher sich in vertikaler Richtung bezüglich der Verkleidung erstreckt, verbunden. Um die Befestigungszungen durch die Durchgangsöffnung führen zu können, werden die Haltearme radial nach innen (horizontal bzw. parallel zur Verkleidung) ausgelenkt und kehren anschließend radial nach außen in ihre ursprüngliche Ruheposition zurück. Mittels der Ratschenbänder lassen sich die Befestigungszungen entlang der Haltearme vertikal nach unten, in Richtung der Rückseite der Verkleidung ziehen, wodurch die Befestigungszungen dann an der Oberfläche der Rückseite anliegen und das Befestigungsmittel fixieren. Um durch einen Monteur betätigt zu werden, weisen die Ratschenbänder Verlängerungen auf, welche nach dem Fixieren des Befestigungsmittels aus der Durchgangsöffnung herausragen. Bevor der eigentliche Ansaugpunkt von unten, d.h. von der Sichtseite ausgehend, in das Befestigungsmittel eingeklebt werden kann, ist es notwendig, die Verlängerungen der Ratschenbänder, beispielsweise mittels eines Messers, zu entfernen. Auch dieses beschriebene Montageverfahren weist eine Vielzahl einzelner Montageschritte auf und ist daher in seiner Ausführung aufwendig und fehleranfällig. Insbesondere das Abschneiden der Ratschenbandverlängerungen ist umständlich und erfordert zusätzliches Montagewerkzeug. Das Befestigungsmittel und der eigentliche Ansaugpunkt sind zweiteilig ausgeführt und müssen einzeln und zueinander passgenau hergestellt werden. Auch die Herstellung der ebenfalls aus verschiedenen Einzelteilen bestehenden Ratschenbänder, welche zunächst zusammengesetzt werden müssen, bedarf eines erhöhten Aufwands.

Auch aus dem Bereich der Beleuchtungstechnik sind Lösungen zur einseitigen Befestigung von LED-Einbaustrahlern an Wand- oder Deckenverkleidungen bekannt. Für deren Montage, bspw. in eine abgehängte Zimmerdecke, werden zunächst die für die Stromversorgung benötigten Kabel hinter der abgehängten Zimmerdecke verlegt, wobei jeweilige Anschlusskabel durch zur Aufnahme des LED-Einbaustrahlers vorgesehene Durchgangsöffnungen geführt werden. Im Anschluss können die Einbaustrahler an die aus den Durchgangsöffnungen ragenden Kabel angeschlossen werden. Die Einbaustrahler werden dann samt Gehäuse in die Durchgangsöffnung eingeschoben und mittels einer Federhalterung eingerastet. Die Federn der Federhalterung werden hierzu beim Einschieben in die Durchgangsöffnung entgegen deren Federkraft an das Gehäuse des Einbaustrahlers angedrückt. Sobald das Gehäuse die Durchgangsöffnung durchquert hat, springen die Federn zurück und fixieren den Einbaustrahler. Die verbundenen Anschlusskabel, welche sich mit sehr geringem Kraftaufwand plastisch verbiegen lassen, werden beim Einschieben des Einbaustrahlers gleichfalls in die Durchgangsöffnung geschoben und hinter der Deckenabhängung verborgen. Die für die LED-Einbaustrahler vorgesehenen Befestigungsmittel sind zwar mit geringem Aufwand herzustellen und einfach zu montieren, bieten jedoch wenig Halt und sind daher auch nur zur Befestigung besonders leichter Bauteile, wie eben der LED-Einbaustrahler, geeignet. Zur Demontage lassen sich die Einbaustrahler mühelos, entgegen der Federkraft, aus den Durchgangsöffnungen herausziehen.

Eine Aufgabe der vorliegenden Erfindung ist es daher, verbesserte Mittel zur Befestigung von Ansaugpunkten eines Ansaugpartikelerkennungssystems bereitzustellen, die eine einfachere und flexiblere Montage, vorzugsweise von der Sichtseite einer wand- oder deckenartigen Raumstruktur ausgehend, ermöglichen. Insbesondere sollen aus anderen Fachgebieten bekannte Befestigungsmöglichkeiten zur Verwendung für Ansaugpunkte eines Ansaugpartikelerkennungssystems an die dort vorgegebenen Anforderungen angepasst werden.

Erfindungsgemäß wird die Aufgabe durch eine Wand- oder Deckendurchführung mit den Merkmalen des Anspruchs 1 gelöst. Die Aufgabe wird außerdem erfindungsgemäß durch eine Verwendung eines Befestigungsmittels nach Anspruch 9 sowie durch ein Montageverfahren nach Anspruch 12 gelöst.

Eine erfindungsgemäße Wand- oder Deckendurchführung der eingangs beschriebenen Art kennzeichnet sich dadurch, dass das Befestigungsmittel eine oder mehrere auslenkbare Federn aufweist mittels welcher in einer mit einem Rohr- oder Schlauchende des Ansaugpartikelerkennungssystems fluidleitend verbundenen Betriebsstellung der Wand- oder Deckendurchführung eine orthogonal zu dem Kragenabschnitt, in Richtung des zweiten Leitungsendes gerichtete Federkraft auf die Rückseite der wand- oder deckenartigen Raumstruktur ausübbar ist.

Nach der erfinderischen Idee ist somit vorgesehen, eine oder mehrere Federn zu verwenden, die es ermöglichen, die Wand- oder Deckendurchführung ausgehend von der Sichtseite einer wand- oder deckenartigen Raumstruktur, insbesondere einer Wand oder Decke, einer Wand- oder Deckenverkleidung oder einer Zwischenwand oder Zwischendecke zu befestigen. Um das Befestigungsmittel, welches die einen oder die mehreren Federn aufweist, durch die Durchgangsöffnung einer wand- oder deckenartigen Raumstruktur zu führen, sind diese aus einer Ausgangsstellung in eine ausgelenkte Stellung bzw. eine Führungsstellung auslenkbar, insbesondere vorspannbar bzw. mit einer Vorspannkraft versehbar, ausgebildet. Nachdem das Befestigungsmittel die Durchgangsöffnung passiert hat, kehren die eine oder die mehreren Federn, vorzugweise nur teilweise, in ihre Ausgangsstellung zurück, sodass die Wand-oder Deckendurchführung mittels der einen oder der mehreren Federn innerhalb der Durchgangsöffnung fixiert ist. Hierbei sind die Durchgangsöffnung begrenzende Abschnitte der wand- oder deckenartigen Raumstruktur zwischen der einen oder den mehreren Federn und dem flanschartigen Kragenabschnitt, insbesondere Flanschabschnitt anordenbar, vorzugsweise einklemmbar und/oder einspannbar.

Mit der erfindungsgemäßen, eine oder mehrere Federn aufweisenden, Wand-oder Deckendurchführung ist es folglich möglich, einen Ansaugpunkt eines Ansaugpartikelerkennungssystems, insbesondere eines Ansaugbranderkennungssystems, von der der Prüfumgebung zugewandten Sichtseite einer wand- oder deckenartigen Raumstruktur, ohne Zugriff zu deren Rückseite, innerhalb einer Durchgangsöffnung zu fixieren und mit einem Rohr- oder Schlauchende des Ansaugpartikelerkennungssystems, insbesondere des Ansaugbranderkennungssystems zu verbinden. Auf zusätzliche Befestigungsmittel, wie Schrauben, Muttern oder ähnliches kann somit verzichtet werden. Da für die Montage der Wand- oder Deckendurchführung ein Zugriff hinter die wand- oder deckenartige Raumstruktur, d. h. zu deren Rückseite, nicht länger notwendig ist, können die Ansaugpunkte für ein Ansaugpartikelerkennungssystem frei von vorgegebenen Strukturen, wie Einbaulampen und/oder Revisionsklappen projektiert werden bzw. an beliebigen Orten der wand- oder deckenartigen Raumstruktur vorgesehen sein. Auch zusätzliche Komponenten zur Fixierung der Wand- oder Deckendurchführung, wie Rückhaltemittel oder Aufnahmestutzen bzw. eine zwei- oder mehrteilige Ausführung der Wand- oder Deckendurchführung selbst, können erfindungsgemäß vermieden werden. Schließlich lässt sich die Wand- oder Deckendurchführung einfach und unkompliziert montieren, indem diese, ohne zusätzliche Montagewerkzeuge, in die Durchgangsöffnung eingeschoben und/oder eingespannt und/oder eingeschnappt wird.

Die Wand- oder Deckendurchführung ist als integrales Bauteil, zumindest einstückig mit dem Leitungsabschnitt, dem Kragenabschnitt und der Ansaugöffnung ausgebildet.

Ein integrales, d.h. einstückiges Bauteil, insbesondere aus einem thermoplastischen Kunststoff, lässt sich in vorteilhafterweise im Spritzgussverfahren, als Spritzgussbauteil herstellen. Gegenüber zwei- oder mehrteiligen Ausführungsformen entfallen zusätzliche Montageschritte, wodurch zum einen Montagezeit gespart und zum anderen Montagefehler, aufgrund falsch zusammengesetzter Teile und/oder aufgrund von Passungenauigkeiten, welche bei der Herstellung einzelner Teile auftreten können, reduziert werden.

Bei einer vorteilhaften Weiterbildung dieser Ausführungsform sind zudem die eine oder die mehreren Federn integral, d. h. einstückig, mit der Wand- oder Deckendurchführung ausgebildet. Vorzugsweise sind die eine oder die mehreren Federn in diesem Fall aus demselben, insbesondere thermoplastischen, Kunststoffmaterial wie die Wand- oder Deckendurchführung selbst ausgebildet und in einer Ausführung als einfache Kunststofffedern in einem einzigen Herstellungsschritt integral, d. h. einstückig mit der Wand- oder Deckendurchführung herstellbar.

Nach einer erfinderischen Ausgestaltung ist die eine oder die mehreren Federn zur Führung der Wand- oder Deckendurchführung durch die Durchgangsöffnung in eine an dem Leitungsabschnitt anliegende und/oder parallel zu dem Leitungsabschnitt verlaufende Führungsstellung auslenkbar.

Um die Wand- oder Deckendurchführung in die Durchgangsöffnung einführen zu können, sind die eine oder die mehreren Federn aus einer Ausgangsstellung, insbesondere in Richtung des Leitungsabschnitts der Wand- oder Deckendurchführung, in eine Führungsstellung auslenkbar und/oder entgegen einer horizontalen, parallel zu dem Kragenabschnitt gerichteten, Federkraftkomponente vorspannbar. In dieser Führungsstellung sind die eine oder die mehreren Federn an dem Leitungsabschnitt anliegend oder parallel zu diesem verlaufend angeordnet. Auf diese Weise lässt sich der Gesamtdurchmesser des Befestigungsmittels der Wand- oder Deckendurchführung derart verkleinern, dass dieses in die Durchgangsöffnung einführbar ist, bis der flanschartige Kragenabschnitt an der Sichtseite der die Durchgangsöffnung begrenzenden Abschnitte der wand- oder deckenartigen Raumstruktur zum Anliegen kommt. Zusätzlich können die eine oder die mehreren Federn in ihrer Führungsstellung eine geführte Positionierung, insbesondere eine zentrierte Anordnung innerhalb der Durchgangsöffnung und/oder fluchtend mit dem Rohr- oder Schlauchende des Ansaugpartikelerkennungssystems, des ersten Leitungsendes ermöglichen.

Erfindungsgemäß ist mittels der einen oder den mehreren Federn eine orthogonal zu dem Kragenabschnitt, in Richtung des zweiten Leitungsendes, gerichtete Federkraft ausübbar.

In vorteilhafter Weiterbildung dieser Erfindungsausgestaltung ist mittels der einen oder den mehreren Federn in einer mit einem Rohr- oder Schlauchende des Ansaugpartikelerkennungssystems fluidleitend verbundenen Betriebsstellung der Wand- oder Deckendurchführung eine Anpresskraft auf das Rohr- oder Schlauchende ausübbar, wobei die Anpresskraft aus der in Richtung des zweiten Leitungsendes gerichteten Federkraft resultiert.

Insbesondere sind die eine oder die mehreren Federn derart ausgelegt und/oder ist deren Federkraft derart dimensioniert, dass die eine oder die mehreren Federn auch in der Betriebsstellung der Wand- oder Deckendurchführung, d.h. sofern diese innerhalb der Durchgangsöffnung fixiert und mit einem Rohr- oder Schlauchende eines Ansaugpartikelerkennungssystems, insbesondere eines Ansaugbranderkennungssystems, fluidleitend verbunden ist, nicht vollständig in ihre ursprüngliche Ausgangsstellung zurückkehren, sodass zumindest eine Federkraftkomponente der Gesamtfederkraft in Richtung des zweiten Leitungsendes ausübbar ist. In der Betriebsstellung der Wand- oder Deckendurchführung sind zwischen der einen oder den mehreren Federn und dem flanschartigen Kragenabschnitt die Durchgangsöffnung begrenzende Abschnitte der wand- oder deckenartigen Struktur angeordnet, sodass zumindest eine Federkraftkomponente der Gesamtfederkraft in Richtung des zweiten Leitungsendes, auf die Rückseite dieser Abschnitte bzw. orthogonal zu diesen Abschnitten ausübbar ist. Hierdurch wird der flanschartige Kragenabschnitt an die gegenüberliegende Sichtseite der wand- oder deckenartigen Raumstruktur "herangezogen". Der Kragenabschnitt verläuft parallel zur wand- oder deckenartigen Raumstruktur und ist mit einem größeren Durchmesser als die Durchgangsöffnung ausgebildet, wodurch die Wand- oder Deckendurchführung in der Betriebsstellung mittels der einen oder den mehreren Federn innerhalb der Durchgangsöffnung verklemmt und/oder verspannt ist. Die Wand- oder Deckendurchführung ist somit allein aufgrund der Federkraft fixierbar, zusätzliche Rückhaltemittel, wie Haken oder Zungen oder ähnliches können auf diese Weise entfallen. Gleichzeitig lässt sich die Durchgangsöffnung mittels des Kragenabschnitts verdecken, sodass dieser auch als Sichtschutz ausgebildet ist.

Zudem kann der Kragenabschnitt als Befestigungsmittel für ein optionales Reduzierungsmittel fungieren, welches zur Reduzierung der Querschnittsfläche bzw. des Durchmessers der Ansaugöffnung mit dem Kragenabschnitt verbunden werden kann. Die Ansaugöffnungen des Rohr- und/oder Schlauchsystems erfordern in Abhängigkeit von der Projektierung fest definierte Durchmesser, welche mittels des Reduzierungsmittels leicht umsetzbar sind. Das Reduzierungsmittel kann bspw. als in die Ansaugöffnung einschnappbarer Clip oder in der einfachsten Ausführung als, insbesondere anklebbare, Ansaugreduzierungsfolie ausgestaltet sein, sodass eine komfortable, fehlerunanfällige Montage möglich ist. Durch die Verbindung des die Ansaugöffnung aufweisenden Kragenabschnitts mit dem Reduzierungsmittel lassen sich pfeifende Geräusche, welche beim Ansaugen von Umgebungsluft bzw. bei der Entnahme der repräsentativen Luftmengen aus der Umgebung auftreten können, vermeiden. Darüber hinaus ermöglicht das Reduzierungsmittel eine visuelle Markierung der Ansaugstellen, wodurch der jeweilige Ansaugdurchmesser in einfacher Weise, zum Beispiel anhand einer Farbkodierung und/oder Beschriftung, bestimmt und/oder überprüft werden kann.

Aus der orthogonal zu dem Kragenabschnitt, in Richtung des zweiten Leitungsendes gerichteten Federkraft resultiert in der Betriebsstellung der Wand-oder Deckendurchführung eine Anpresskraft, welche, entgegen der in Richtung des zweiten Leitungsendes gerichteten Federkraft, in Richtung des ersten Leitungsendes gerichtet ist. Vorzugsweise wird die Anpresskraft mittelbar über das erste Leitungsende auf das Rohr- oder Schlauchende übertragen. Einerseits lässt sich so, bspw. in Verbindung mit einem konisch ausgeführten ersten Leitungsende, die Dichtigkeit der fluidleitenden Verbindung zwischen dem ersten Leitungsende und dem Rohr- oder Schlauchende erhöhen. Optional oder zusätzlich kann die aufgebrachte Anpresskraft einer durch ein gestauchtes und/oder gebogenes Schlauchende hervorgerufenen Gegenkraft, entgegenwirken, wodurch verhindert wird, dass die Wand- oder Deckendurchführung von dem Schlauchende aus der Durchgangsöffnung heraus "gedrückt" wird.

In Ausgestaltung der Erfindung können mehrere Federn jeweils paarweise, einander gegenüberliegend angeordnet sind.

Sowohl bei einer geraden Anzahl, als auch bei einer ungeraden Anzahl an Federn ist es außerdem zweckmäßig, diese mit einem jeweils identischen Winkelabstand zueinander anzuordnen. Bei drei Federn könnte der Winkelabstand z. B. 120°, bei vier Federn 90° betragen. Durch eine regelmäßige Anordnung der Federn zueinander kann eine gleichmäßige Verteilung der auf die Rückseite der wand- oder deckenartigen Raumstruktur wirkenden Federkraft sichergestellt werden.

Eine optional vorteilhafte Ausführungsform der Erfindung zeichnet sich dadurch aus, dass mindestens eine, vorzugsweise alle, der einen oder der mehreren Federn als Spiralfeder mit einem jeweiligen Rückhaltebügel ausgebildet ist, vorzugsweise ausgebildet sind. Durch die Verwendung von Spiralfedern kann insbesondere aufgrund des geringen Materialeinsatzes eine besonders kostengünstige Ausführungsform der Erfindung realisiert werden. Aufgrund des als Hebel wirkenden Rückhaltebügels sind die Federn zum Durchführen durch die Durchgangsöffnung ohne hohen Kraftaufwand auslenkbar, womit die Deckendurchführung in dieser Ausführungsform besonders einfach zu montieren ist.

Die eine oder die mehreren Spiralfedern sind in vorteilhafter Ausgestaltung direkt, d. h. unmittelbar, mit dem Leitungsabschnitt der Wand- oder Deckendurchführung verbunden und weisen integrale Rückhaltebügel auf.

Nach einer weiteren vorteilhaften Ausgestaltung ist mindestens eine, vorzugsweise sind alle, der einen oder der mehreren Federn als gebogene oder geknickte Blattfeder mit einem ersten Schenkel, welcher dem ersten Leitungsende des Leitungsabschnitts zugeordnet ist und einem zweiten Schenkel, welcher dem zweiten Leitungsende des Leitungsabschnitts zugeordnet ist, ausgebildet. Als Blattfedern ausgeführte Federn sind besonders stabil bzw. robust und daher langlebig sowie wartungsarm. Die Vorspannung der Blattfeder und somit deren Form bleibt gegenüber anderen Ausführungen länger erhalten.

In Weiterbildung dieser Ausgestaltung ist die Länge des ersten Schenkels größer als die Länge des zweiten Schenkels.

Vorzugsweise erstrecken sich die Schenkel der als Blattfeder ausgeführten einen oder mehreren Federn entlang des Leitungsabschnitts und/oder verlaufen parallel zu dem Leitungsabschnitt. Üblicherweise erfolgt der Übergang vom ersten Schenkel zum zweiten Schenkel bei gekrümmten oder gebogenen Blattfedern am Ort des kleinsten Krümmungsradius. Indem die Länge des ersten Schenkels, welcher dem ersten Leitungsende zugeordnet ist größer gewählt wird, als die Länge des zweiten Schenkels, welcher dem zweiten, die Ansaugöffnung aufweisenden, Leitungsende zugeordnet ist, ist die zum Einführen der Wand- oder Deckendurchführung in die Durchgangsöffnung bzw. zum Auslenken der einen oder der mehreren Federn in die Führungsstellung benötigte Kraft geringer, als zum Herausnehmen der Wand- oder Deckendurchführung.

Schließlich ist auch eine erfinderische Ausgestaltung vorteilhaft, bei welcher mindestens eine, vorzugsweise alle, der einen oder der mehreren Federn als radial von dem Leitungsabschnitt abgespreizte Spreizfeder ausgebildet ist, vorzugsweise ausgebildet sind.

Eine derartige Ausgestaltung kann in einfacher Weise im Spritzgussverfahren hergestellt werden. Die Federn mit dem Leitungsabschnitt sind bspw. in der Art eines Spreizdübels und/oder als einfache Kunststoffflügel ausgebildet. In zweckmäßiger Weiterbildung kann die Wand- oder Deckendurchführung mehrere voneinander in axialer Richtung am Leitungsabschnitt angeordnete Federreihen an abgespreizten Federn aufweisen, sodass eine Fixierung derselben Wand- oder Deckendurchführung innerhalb von Durchgangsöffnungen mit abweichender Wandstärke möglich ist.

Eine erfindungsgemäße Verwendung ist für ein eine oder mehrere Federn aufweisendes Befestigungsmittel zur Fixierung einer Wand- oder Deckendurchführung für ein Ansaugpartikelerkennungssystem, insbesondere ein Ansaugbranderkennungssystem, nach einer oder mehrerer der zuvor beschriebenen Ausgestaltungen, innerhalb einer Durchgangsöffnung einer wand- oder deckenartigen Raumstruktur, wobei die wand- oder deckenartige Raumstruktur eine einer Prüfumgebung zugewandte Sichtseite und eine der Prüfumgebung abgewandte Rückseite aufweist, vorgesehen.

Die wand- oder deckenartige Raumstruktur begrenzt die Prüfumgebung und/oder grenzt zumindest teilweise an diese an. Unter einer wand- oder deckenartigen Raumstruktur sind insbesondere Wände oder Decken, Wand- oder Deckenverkleidungen sowie Zwischenwände oder Zwischendecken, beispielsweise eines Raums eines Gebäudes oder Verkehrsmittels, zu verstehen. Die dem Raum bzw. der Prüfumgebung zugewandte, sichtbare, Seite wird als Sichtseite, die gegenüberliegend angeordnete, dem Raum bzw. der Prüfumgebung abgewandte, nicht sichtbare Seite als Rückseite bezeichnet.

Die erfindungsgemäße Verwendung kennzeichnet sich dadurch, dass die Wand-oder Deckendurchführung einen Leitungsabschnitt mit einem ersten Leitungsende, welches fluidleitend mit einem Rohr- oder Schlauchende des Ansaugpartikelerkennungssystems verbunden wird und einen Kragenabschnitt aufweist, welcher Kragenabschnitt sich ausgehend von einem zweiten Leitungsende des Leitungsabschnitts in radialer Richtung erstreckt, wobei die wand- oder deckenartige Raumstruktur zwischen der einen oder den mehreren Federn und dem Kragenabschnitt angeordnet wird und die eine oder die mehreren Federn zur Fixierung eine Federkraft orthogonal zu dem Kragenabschnitt auf die Rückseite der wand- oder deckenartigen Raumstruktur ausüben, sodass der flanschartige Kragenabschnitt an eine gegenüberliegende Sichtseite der wand- oder deckenartigen Raumstruktur herangezogen wird.

Die erfindungsgemäße Verwendung sieht also vor, an sich aus der Beleuchtungstechnik bekannte, eine oder mehrere Federn aufweisende Befestigungsmittel zur Installation eines Ansaugpunkts eines Ansaugpartikelerkennungssystems, insbesondere eines Ansaugbranderkennungssystems, zu verwenden. Hierzu wird das eine oder mehrere Federn aufweisende Befestigungsmittel, vorzugsweise integral, mit einem Leitungsabschnitt einer Wand- oder Deckendurchführung verbunden bzw. wird das Befestigungsmittel zumindest teilweise durch den Leitungsabschnitt ersetzt. Der Leitungsabschnitt weist ein erstes Leitungsende auf, welches fluidleitend mit einem Rohr- oder Schlauchende des Ansaugpartikelerkennungssystems, insbesondere des Ansaugbranderkennungssystems verbunden wird. Das zweite Leitungsende ist mit einer Ansaugöffnung ausgebildet und ragt in die Prüfumgebung bzw. in den von der Wand- oder deckenartigen Raumstruktur begrenzten Raum hinein. Das zweite Leitungsende des Leitungsabschnitts weist außerdem einen Kragenabschnitt auf, welcher sich von dem Leitungsende ausgehend radial nach außen, insbesondere parallel zur wand- oder deckenartigen Raumstruktur, erstreckt. Zur Befestigung werden die eine oder die mehreren Federn auf der Rückseite, und der Kragenabschnitt, welcher insbesondere mit einem größeren Durchmesser als dem Durchmesser der Durchgangsöffnung ausgebildet ist, auf der Sichtseite der wand-oder deckenartigen Raumstruktur angeordnet, sodass die Wand- oder Deckendurchführung mittels der einen oder der mehreren Federn innerhalb der Durchgangsöffnung befestigbar, insbesondere verklemmbar und/oder verspannbar ist. Mittels des eine oder mehrere Federn aufweisenden Befestigungsmittels lässt sich folglich eine fluidführende Leitungsverbindung, welche ein Rohr- oder Schlauchende eines Ansaugpartikelerkennungssystems, insbesondere eines Ansaugbranderkennungssystems, mit einer Prüfumgebung verbindet, in Form einer Wand- oder Deckendurchführung innerhalb einer Durchgangsöffnung einer wand- oder deckenartigen Raumstruktur fixieren und/oder befestigen.

Nach einer bevorzugten Verwendung wird das erste Leitungsende mittels einer Steckverbindung oder einer Schlauchtülle mit dem Rohr- oder Schlauchende des Ansaugpartikelerkennungssystems, insbesondere des Ansaugbranderkennungssystems, verbunden.

Eine vorteilhafte Verwendung sieht außerdem vor, dass die eine oder die mehreren Federn des Befestigungsmittels eine aus einer Federkraft resultierende Anpresskraft auf das Rohr- oder Schlauchende ausüben.

Zweckmäßigerweise ist eine Steckverbindung realisierbar, indem das erste Leitungsende des Leitungsabschnitts konisch ausgebildet ist, sodass das erste Leitungsende in das Rohr- oder Schlauchende einsteckbar ist. Durch dessen konische Ausbildung lässt sich das erste Leitungsende in unterschiedliche Durchmesser aufweisende Rohr- oder Schlauchenden einstecken und außerdem besonders gute Dichtungseigenschaften erzielen, sodass Leckageströme, welche im Zusammenhang mit Ansaugpartikelerkennungssystemen zu einer unzuverlässigen Messung führen würden, vermieden werden können. Alternativ oder zusätzlich kann das Rohr- oder Schlauchende mit dem ersten Leitungsende verklebt werden.

Durch die Verwendung einer oder mehrerer Federn zur Befestigung der Wand-oder Deckendurchführung innerhalb einer Durchgangsöffnung, wird eine Federkraft, insbesondere eine Federkraftkomponente einer Gesamtfederkraft, orthogonal zum Kragenabschnitt, in Richtung des zweiten Leitungsendes, auf die Rückseite der die Durchgangsöffnung begrenzenden wand- oder deckenartigen Raumstruktur ausgeübt. Mittels des Leitungsabschnitts und des ersten Leitungsendes, welches insbesondere konisch ausgebildet ist, wird eine aus der orthogonal zu dem Kragenabschnitt in Richtung des zweiten Leitungsendes wirkenden Federkraft, insbesondere Federkraftkomponente, resultierende Anpresskraft, welche wiederum orthogonal zu dem Kragenabschnitt in Richtung des ersten Leitungsendes wirkt, auf das Rohr- oder Schlauchende des Ansaugpartikelerkennungssystems, insbesondere des Ansaugbranderkennungssystem, übertragen. Diese Anpresskraft ist in der speziellen, erfindungsgemäßen Verwendung notwendig, um entweder einer durch ein beispielsweise gestauchtes und/oder gebogenes Schlauchende hervorgerufenen Gegenkraft entgegenzuwirken und so zu verhindern, dass die Wand- oder Deckendurchführung durch das Schlauchende aus der Durchgangsöffnung heraus "gedrückt" wird. Optional oder zusätzlich lässt sich die Dichtigkeit der Verbindung zwischen Rohr- oder Schlauchende und erstem Leitungsende durch die aufgebrachte Anpresskraft erhöhen, um Leckageströme zu vermeiden.

Gegenüber der herkömmlichen Befestigung von Ansaugpunkten eines Ansaugpartikelerkennungssystems, bei der üblicherweise die aus der Durchgangsöffnung herausragenden Schlauchenden unter Einsatz von zusätzlichem Werkzeug gekürzt werden, sieht die neuartige Verwendung insbesondere vor, ein aus der Durchgangsöffnung herausragendes Schlauchende während des Einführens des Leitungsabschnitts in die Durchgangsöffnung zu stauchen und/oder zu biegen. Durch Verwendung des erfindungsgemäßen Befestigungsmittels kann einerseits auf zusätzliches Werkzeug verzichtet werden, andererseits wird aufgrund der gegeneinander wirkenden Federkraft des Befestigungsmittels und der durch das gestauchte und/oder gebogene Schlauchende hervorgerufenen Gegenkraft die Dichtigkeit der fluidleitenden Verbindung erhöht.

Erfindungsgemäß ist auch ein Montageverfahren zur Fixierung einer Wand- oder Deckendurchführung für ein Ansaugpartikelerkennungssystem, insbesondere ein Ansaugbranderkennungssystem, nach einer der zuvor beschriebenen Ausgestaltungen, innerhalb einer Durchgangsöffnung einer wand- oder deckenartigen Raumstruktur mit einer einer Prüfumgebung zugewandten Sichtseite und einer der Prüfumgebung abgewandten Rückseite vorgesehen, wobei in einem ersten Schritt ein rückseitig, hinter der wand- oder deckenartigen Raumstruktur, angeordnetes Rohr- und/oder Schlauchsystem des Ansaugpartikelerkennungssystems bereitgestellt wird.

In einem zweiten, auf den ersten Schritt folgenden, Schritt wird ein aus der Durchgangsöffnung herausragendes Schlauchende des Rohr- und/oder Schlauchsystems mit einem ersten Leitungsende eines Leitungsabschnitts der Wand- oder Deckendurchführung fluidleitend verbunden und in einem dritten, auf den zweiten Schritt folgenden, Schritt die Wand- oder Deckendurchführung mittels eines eine oder mehrere Federn aufweisenden Befestigungsmittels innerhalb der Durchgangsöffnung fixiert, wobei die eine oder die mehreren Federn in eine Führungsstellung ausgelenkt werden und der Leitungsabschnitt der Wand- oder Deckendurchführung in die Durchgangsöffnung eingeführt wird, sodass die eine oder die mehreren Federn auf der Rückseite der wand- oder deckenartigen Raumstruktur angeordnet sind, und ein an einem zweiten Leitungsende des Leitungsabschnitts angeordneter Kragenabschnitt auf der Sichtseite der wand- oder deckenartigen Raumstruktur angeordnet ist, sodass eine von dem Kragenabschnitt eingefasste Ansaugöffnung fluidleitend in die Prüfumgebung weist.

Vorzugsweise werden die eine oder die mehreren Federn beim Auslenken aus einer Ausgangsstellung in die Führungsstellung vorgespannt bzw. mit einer Vorspannkraft versehen, sodass die eine oder die mehreren Federn auf der Rückseite der wand- oder deckenartigen Raumstruktur, insbesondere nur teilweise, in ihre Ausgangsstellung zurückkehren, wodurch eine Federkraft auf die Rückseite der die Durchgangsöffnung begrenzenden wand- oder deckenartigen Raumstruktur ausgeübt wird.

Bei einer bevorzugten Verfahrensgestaltung werden die eine oder die mehreren Federn in eine an dem Leitungsabschnitt der Decken- oder Wanddurchführung anliegende und/oder parallel zu dem Leitungsabschnitt verlaufende Führungsstellung ausgelenkt.

Schließlich kennzeichnet sich eine vorteilhafte Verfahrensvariante dadurch, dass das aus der Durchgangsöffnung herausragende Schlauchende während des Einführens des Leitungsabschnitts in die Durchgangsöffnung gestaucht und/oder gebogen wird.

Beim Einführen der Wand- oder Deckendurchführung in die Durchgangsöffnung wird das mit dem ersten Leitungsende verbundene und zunächst aus der Durchgangsöffnung herausragende Schlauchende hinter die, d.h. auf die Rückseite der wand- oder deckenartigen Raumstruktur geschoben, wobei dieses gestaucht und/oder gebogen wird. Durch ein derart gestauchtes und/oder gebogenes Schlauchende wird eine dem ersten Leitungsende entgegenwirkende Gegenkraft ausgeübt. Um zu verhindern, dass die Wand- oder Deckendurchführung durch das gestauchte und/oder gebogene Schlauchende, insbesondere durch die von diesem ausgeübte Gegenkraft, aus der Durchgangsöffnung heraus "gedrückt" wird, ist eine orthogonal zu dem Kragenabschnitt, in Richtung des zweiten Leitungsendes wirkende Federkraft, insbesondere Federkraftkomponente, der einen oder der mehreren Federn so zu wählen, dass ein Betrag einer aus dieser Federkraft resultierenden Anpresskraft, welche orthogonal zum Kragenabschnitt in Richtung des ersten Leitungsendes wirkt, gleich oder vorzugsweise größer ist, als der Betrag der Gegenkraft.

Es ist darauf hinzuweisen, dass die in der vorangegangenen und nachfolgenden Beschreibung einzeln aufgeführten Merkmale sowie Maßnahmen in beliebiger, technisch sinnvoller Weise miteinander kombiniert werden können. Die Beschreibung charakterisiert und spezifiziert die Erfindung insbesondere im Zusammenhang mit den Figuren zusätzlich.

Weitere vorteilhafte Ausgestaltungen der Erfindung sind in der folgenden Figurenbeschreibung offenbart. Es zeigen
- Fig. 1: eine schematische Darstellung eines Rohr- und/oder Schlauchsystems eines Ansaugpartikelerkennungssystems, welches mit einer beispielhaften Ausführung einer erfindungsgemäßen Wand- oder Deckendurchführung verbunden ist,
- Fig. 2: eine schematische Schnittdarstellung einer ersten beispielhaften Ausführungsform einer erfindungsgemäßen Wand- oder Deckendurchführung mit einem Spiralfedern aufweisenden Befestigungsmittel,
- Fig. 3: eine schematische Schnittdarstellung einer zweiten beispielhaften Ausführungsform einer erfindungsgemäßen Wand- oder Deckendurchführung mit einem Blattfedern aufweisenden Befestigungsmittel,
- Fig. 4a: eine schematische Schnittdarstellung einer dritten beispielhaften Ausführungsform einer erfindungsgemäßen Wand- oder Deckendurchführung mit einem Spreizfedern aufweisenden Befestigungsmittel und
- Fig. 4b: eine schematische Schnittdarstellung der dritten beispielhaften Ausführungsform einer erfindungsgemäßen Wand- oder Deckendurchführung mit einem Spreizfedern aufweisenden Befestigungsmittel innerhalb einer wand- oder deckenartigen Raumstruktur mit einer höheren Wandstärke.

In den unterschiedlichen Figuren sind gleiche Teile stets mit denselben Bezugszeichen versehen, weswegen diese in der Regel auch nur einmal beschrieben werden.

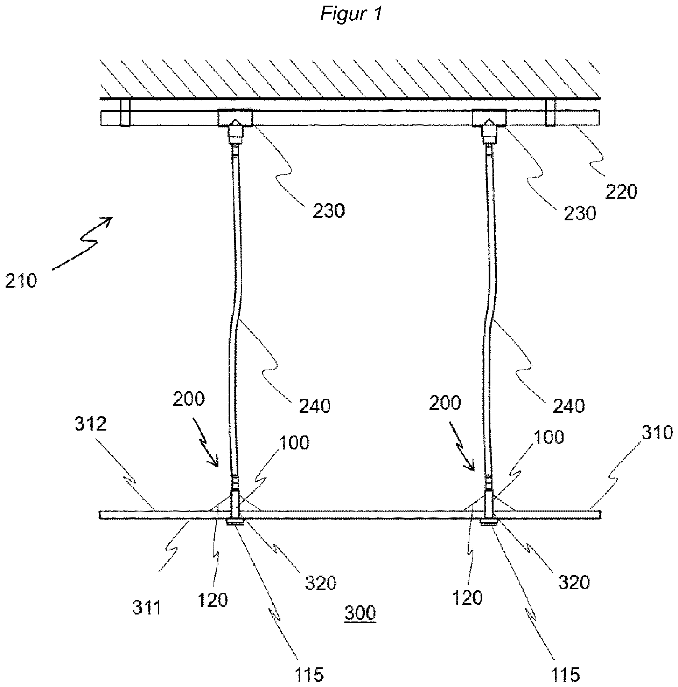

Eine schematische Darstellung eines Abschnitts eines Rohr- und/oder Schlauchsystems 210 für ein Ansaugpartikelerkennungssystem, im Speziellen für ein Rauchansaugsystem, kann der Figur 1 entnommen werden. Der dargestellte Abschnitt des Rohr- und/oder Schlauchsystems 210 umfasst ein Zuleitungsrohr 220, welches mit der hier nicht dargestellten Detektionskammer fluidleitend verbunden ist um dieser eine aus einer Prüfumgebung 300 entnommene repräsentative Luftmenge zuzuführen. An die Prüfumgebung 300, bei welcher es sich vorzugsweise um einen Raum eines Gebäudes oder Verkehrsmittels handelt, grenzt eine wand- oder deckenartige Raumstruktur 310 an, insbesondere wird die Prüfumgebung 300 durch die wand- oder deckenartige Raumstruktur 310 begrenzt. Bei der wand- oder deckenartigen Raumstruktur 310 kann es sich bspw. um eine Wand oder Decke, eine Wand- oder Deckenverkleidung sowie um eine Zwischenwand oder Zwischendecke des Raums handeln. Die wand- oder deckenartige Raumstruktur 310 weist eine der Prüfumgebung 300 zugewandte Sichtseite 311 und eine gegenüberliegende, der Prüfumgebung 300 abgewandte Rückseite 312 auf und ist von zwei Durchgangsöffnungen 320 durchsetzt. Das Rohr- und/oder Schlauchsystem 210 ist hinter, d. h. auf der Rückseite 312 der wand- oder deckenartigen Raumstruktur 310 angeordnet, insbesondere verborgen.

Um eine Entnahme der repräsentativen Luftmenge aus der Prüfumgebung 300 zu ermöglichen, steht ein jeweiliger Ansaugschlauch 240 über ein zugeordnetes T-Stück 230 fluidleitend mit dem Zuleitungsrohr 220 in Verbindung. Die Ansaugschläuche 240 sind jeweils mittels eines ersten Schlauchendes 200 mit einer Wand- oder Deckendurchführung 100 fluidleitend verbunden, insbesondere mündet das erste Schlauchende 200 in die Wand- oder Deckendurchführung 100. Die Wand- oder Deckendurchführungen 100 sind jeweils innerhalb einer zugeordneten, die wand- oder deckenartige Raumstruktur 310 durchsetzenden Durchgangsöffnung 320 angeordnet und ragen in die Prüfumgebung 300 hinein bzw. münden innerhalb der Prüfumgebung 300. Zur Fixierung der Wand- oder Deckendurchführungen 100 ist jeweils ein Befestigungsmittel 120 vorgesehen.

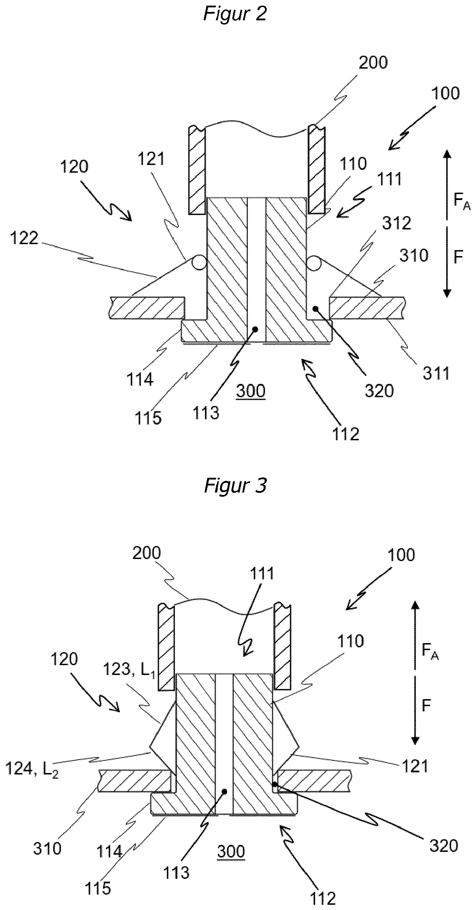

In Figur 2 ist eine schematische Schnittdarstellung einer ersten beispielhaften Ausführungsform einer erfindungsgemäßen Wand- oder Deckendurchführung 100 zur fluidleitenden Verbindung eines Rohr- oder Schlauchendes 200 eines nicht dargestellten Ansaugpartikelerkennungssystems, insbesondere eines Ansaugbranderkennungssystems, mit einer Prüfumgebung 300 in einer Betriebsstellung gezeigt. An die Prüfumgebung 300, bei welcher es sich vorzugsweise um einen Raum eines Gebäudes oder Verkehrsmittels handelt, grenzt eine wand- oder deckenartige Raumstruktur 310 an, insbesondere wird die Prüfumgebung 300 durch die wand- oder deckenartige Raumstruktur 310 begrenzt. Bei der wand- oder deckenartigen Raumstruktur 310 kann es sich bspw. um eine Wand oder Decke, eine Wand- oder Deckenverkleidung sowie um eine Zwischenwand oder Zwischendecke des Raums handeln. Die wand- oder deckenartige Raumstruktur 310 weist eine der Prüfumgebung 300 zugewandte Sichtseite 311 und eine gegenüberliegende, der Prüfumgebung 300 abgewandte Rückseite 312 auf und ist von einer Durchgangsöffnung 320 durchsetzt, welche zur Aufnahme eines Ansaugpunkts und folglich zur Aufnahme der Wand- oder Deckendurchführung 100, vorgesehen ist. Ein ein erstes Leitungsende 111 sowie ein zweites Leitungsende 112 umfassender Leitungsabschnitt 110 der Wand-oder Deckendurchführung 100 ist, vorzugsweise zentriert, innerhalb der Durchgangsöffnung 320 angeordnet. Das erste Leitungsende 111 ist dem Rohr- oder Schlauchende 200 des Ansaugpartikelerkennungssystems zugeordnet und mit diesem verbunden bzw. in dieses eingesteckt. Das zweite Leitungsende 112 ragt in die Prüfumgebung 300 hinein und weist eine Ansaugöffnung 113 auf, wodurch sich das Rohr- oder Schlauchende 200 über den Leitungsabschnitt 110 in der Betriebsstellung der Wand- oder Deckendurchführung 100 fluidleitend mit der Umgebung 300 verbinden lässt.

Von dem zweiten Leitungsende 112 ausgehend erstreckt sich ein flanschartiger Kragenabschnitt 114 in radialer Richtung. Der Kragenabschnitt 114 verläuft parallel zu der wand- oder deckenartigen Raumstruktur 310 und ist deren Sichtseite 311 zugeordnet, insbesondere liegt der Kragenabschnitt 114 an der Sichtseite 311 an. Ein Befestigungsmittel 120 ist mit dem Leitungsabschnitt 110 verbunden und weist zwei gegenüberliegend angeordnete, hier als Spiralfedern ausgebildete, Federn 121 auf. Von den Federn 121 ausgehend und, insbesondere integral mit diesen verbunden, erstreckt sich jeweils ein Rückhaltebügel 122. Mittels der Rückhaltebügel 122 wird eine orthogonal zu dem Kragenabschnitt 114, in Richtung des zweiten Leitungsendes 112 wirkende Federkraft F, insbesondere eine Federkraftkomponente, auf die Rückseite 312 der wand- oder deckenartigen Raumstruktur 310 ausgeübt. Die die Durchgangsöffnung 320 begrenzende wand- oder deckenartige Raumstruktur 310 ist folglich zwischen den Rückhaltebügeln 122 und dem Kragenabschnitt 114 angeordnet und/oder verklemmt bzw. verspannt. Zum Durchführen des Leitungsabschnitts 110 durch die Durchgangsöffnung 320 lassen sich die Rückhaltebügel 122 durch Auslenken, insbesondere Vorspannen, der Federn 121 in Richtung des ersten Leitungsendes 111, in eine zum Leitungsabschnitt 110 parallel verlaufende, insbesondere in eine an dem Leitungsabschnitt 110 anliegende, Führungsstellung überführen.

Der Kragenabschnitt 114 kann außerdem zur Befestigung eines Reduzierungsmittels 115, beispielsweise wie hier dargestellt einer Ansaugreduzierungsfolie, dienen. Das Reduzierungsmittel 115 ist vorzugsweise mit einer kreisrunden Fläche ausgebildet und weist einen Außendurchmesser auf, welcher dem Außendurchmesser des Kragenabschnitts 114 angepasst ist. Ein Innendurchmesser des Reduzierungsmittels 115 begrenzt eine zentral innerhalb des Reduzierungsmittels 115 angeordnete Öffnung, welche koaxial zur Ansaugöffnung 113 der Wand- oder Deckendurchführung 100 angeordnet ist. Aufgrund des geringeren Innendurchmessers des Reduzierungsmittels 115 bzw. der kleineren Öffnung wird die Querschnittsfläche, insbesondere der Durchmesser, der Ansaugöffnung 113 reduziert.

Das Reduzierungsmittel 115 kann alternativ auch als Clip ausgestaltet sein. Durch die Anbringung eines Reduzierungsmittels 115 an einem Kragenabschnitt 114 können pfeifende Geräusche, welche beim Ansaugen von Umgebungsluft bzw. bei der Entnahme der repräsentativen Luftmenge aus der Umgebung 300 gegebenenfalls auftreten, vermieden werden. Darüber hinaus stellt das Reduzierungsmittel 115 eine einfache Möglichkeit zur variablen Festlegung einer benötigten Querschnittsfläche, insbesondere des Durchmessers, d. h. der Größe der Ansaugöffnung 113 einer standardmäßigen Wand- oder Deckendurchführung 100 dar und ermöglicht eine visuelle Markierung der Ansaugstellen, wodurch die jeweilige Querschnittsfläche, insbesondere der Durchmesser, in einfacher Weise, zum Beispiel anhand einer Farbkodierung oder Beschriftung, bestimmt und/oder überprüft werden kann.

In einer Verbindung mit einem Schlauchende 200 wird, bevor der Leitungsabschnitt 110 durch die Durchgangsöffnung 320 geführt wird, dessen erstes Leitungsende 111 üblicherweise in das zunächst aus der Durchgangsöffnung 320 herausragende Schlauchende 200 eingesteckt. Zweckmäßigerweise, u. a. um eine verbesserte Dichtigkeit zu erzielen, ist das erste Leitungsende 111 hierzu konisch ausgestaltet und kann zusätzlich mit dem Schlauchende 200 verklebt werden. Beim Durchführen des Leitungsabschnitts 110 durch bzw. beim Einführen der Wand- oder Deckendurchführung 100 in die Durchgangsöffnung 320 wird das mit dem ersten Leitungsende 110 verbundene und zunächst aus der Durchgangsöffnung 320 herausragende Schlauchende 200 hinter bzw. auf die Rückseite 312 der wand- oder deckenartigen Raumstruktur 310 geschoben, wobei dieses gestaucht und/oder gebogen wird und daher eine Gegenkraft auf das erste Leitungsende 111 ausübt. Um zu verhindern, dass das gebogene und/oder gestauchte Schlauchende 200 die Wand- oder Deckendurchführung 100 aus der Durchgangsöffnung 320 heraus "drückt", ist eine orthogonal zu dem Kragenabschnitt 114, in Richtung des zweiten Leitungsendes 112 wirkende Federkraft F, insbesondere eine Federkraftkomponente, der beiden Federn 121 so zu wählen, dass ein Betrag einer aus dieser Federkraft F resultierenden Anpresskraft F_{A}, welche orthogonal zum Kragenabschnitt 114 in Richtung des ersten Leitungsendes 111 wirkt, gleich oder vorzugsweise größer ist, als der Betrag der Gegenkraft.

In der Figur 3 ist eine schematische Schnittdarstellung einer zweiten beispielhaften Ausführungsform einer erfindungsgemäßen Wand- oder Deckendurchführung 100 mit einem Leitungsabschnitt 110, einem Kragenabschnitt 114 sowie einem Befestigungsmittel 120 in einer Betriebsstellung dargestellt. Die zweite Ausführungsform der Wand- oder Deckendurchführung 100 unterscheidet sich von der ersten Ausführungsform dadurch, dass das Befestigungsmittel 120 anstelle der Spiralfedern zwei, als Blattfedern ausgebildete Federn 121 aufweist. Die als Blattfedern ausgebildeten Federn 121 umfassen jeweils einen ersten Schenkel 123, welcher dem ersten Leitungsende 111 zugeordnet ist und einen zweiten Schenkel 124, welcher dem zweiten Leitungsende 112 zugeordnet ist.

Zum Durchführen des Leitungsabschnitts 110 durch die Durchgangsöffnung 320 der wand- oder deckenartigen Raumstruktur 310 können die Schenkel 123, 124 der jeweiligen Feder 121 radial in Richtung des Leitungsabschnitts 110 ausgelenkt und/oder vorgespannt werden, sodass diese vorzugsweise am Leitungsabschnitt 110 anliegen. Um eine Befestigung der Wand- oder Deckendurchführung 100 zu erleichtern, ist die Länge L₁ des ersten Schenkels 123 größer als die Länge L₂ des zweiten Schenkels 124. Aufgrund der unterschiedlichen Schenkellängen L₁ > L₂ ergibt sich beim Einführen des Leitungsabschnitts 110, in Richtung des Rohr- oder Schlauchendes 200, ein längerer Hebelarm, sodass in dieser Richtung ein geringerer Kraftaufwand zur radialen Auslenkung der Federn 121 notwendig ist. Umgekehrt wäre beim Herausziehen des Leitungsabschnitts 110 der Kraftaufwand aufgrund des kürzeren Hebelarms höher wodurch ein verbesserter Halt der Wand- oder Deckendurchführung 100 innerhalb der Durchgangsöffnung 320 erzielt wird. Ein zusätzlicher Vorteil dieser Ausführungsvariante besteht darin, dass der Durchmesser der Durchgangsöffnung 320 in etwa entsprechend dem Außendurchmesser des Leitungsabschnitts 110 ausgelegt werden kann, da die Schenkel 123, 124 in der Führungsstellung, beim Durchführen des Leitungsabschnitt 110 durch die Durchgangsöffnung 320 nahezu vollständig an den Leitungsabschnitt 110 anlegbar sind.

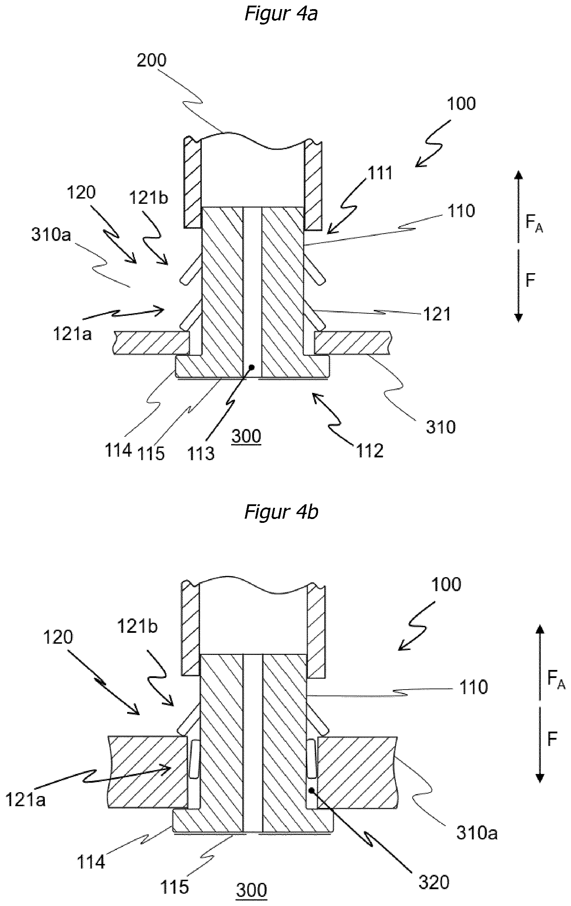

In der Figur 4a ist eine schematische Schnittdarstellung einer dritten beispielhaften Ausführungsform einer erfindungsgemäßen Wand- oder Deckendurchführung 100 mit einem Leitungsabschnitt 110, einem Kragenabschnitt 114 sowie einem Befestigungsmittel 120 dargestellt. Die Wand-oder Deckendurchführung 100 ist in einer Betriebsstellung über das erste Leitungsende 111 mit einem Rohr- und/oder Schlauchende 200 fluidleitend verbunden. Das zweite Leitungsende 112 des Leitungsabschnitts 110 ragt in eine Prüfumgebung 300 hinein. Das in der Figur 3 gezeigte, dritte Ausführungsbeispiel der Wand- oder Deckendurchführung 100 unterscheidet sich von den zuvor beschriebenen Ausführungsbeispielen durch das Befestigungsmittel 120, welches hier vier Federn 121 aufweist, die jeweils als radial von dem Leitungsabschnitt 110 abgespreizte Spreizfedern ausgebildet sind. Die als Spreizfedern ausgebildeten Federn 121 sind reihenweise, entlang des Leitungsabschnitts 110 axial zueinander beabstandet angeordnet, wobei jeweils zwei einander gegenüberliegende Federn 121 eine Federreihe 121a, 121b bilden. Aufgrund dieser mehrreihigen Ausführungsform ist eine Fixierung der Wand- oder Deckendurchführung 100 innerhalb von Durchgangsöffnungen 320 mit abweichender Wandstärke möglich. Gemäß der Figur 4a ist die wand- oder deckenartige Raumstruktur 310 zwischen dem Kragenabschnitt 114 und einer unteren, dem zweiten Leitungsende 112 zugeordneten, Federreihe 121a angeordnet. Die vorgeschlagene Anzahl an Federreihen 121a, 121b und jeweils darin angeordneten Federn 121 ist lediglich beispielhaft zu verstehen. Im Rahmen der Erfindung kommen auch andere, technisch sinnvolle Umsetzungen mit einer abweichenden Anzahl an Federreihen 121a, 121b und/oder Federn 121 in Betracht.

Schließlich ist der Figur 4b die beispielhafte Ausführungsform der erfindungsgemäßen Wand- oder Deckendurchführung 100 gemäß Figur 4a in einer schematischen Schnittdarstellung zu entnehmen. Die Wand- oder Deckendurchführung 100 ist hier innerhalb einer Durchgangsöffnung 320 der wand- oder deckenartigen Raumstruktur 310a mit einer gegenüber der wand-oder deckenartigen Raumstruktur 310 gemäß Figur 4a höheren Wandstärke angeordnet. Die wand- oder deckenartige Raumstruktur 310a ist zwischen einer oberen, oberhalb der unteren Federreihe 121a angeordneten Federreihe 121b des Befestigungsmittels 120 und dem Kragenabschnitt 114 angeordnet. Die untere Federreihe 121a liegt in diesem Fall, wie auch in einer zum Durchführen des Leitungsabschnitts 110 durch die Durchgangsöffnung 320 geeigneten Führungsstellung, an dem Leitungsabschnitt 110 an.

Die beispielhaften Ausgestaltungen der Wand- oder Deckendurchführung 100 gemäß der Figuren 3, 4a und 4b mit als Blattfeder ausgebildeten Federn 121 bzw. als Spreizfedern ausgebildeten Federn 121, können in einfacher Weise im Spritzgussverfahren hergestellt werden, wobei die Wand- oder Deckendurchführung 100 als integrales Bauteil, d.h. einstückig, mit dem Leitungsabschnitt 110, dem Kragenabschnitt 114, der Ansaugöffnung 113 und den Federn 121 ausgebildet ist.

Insgesamt lässt sich mittels der beispielhaften Ausgestaltungen der erfindungsgemäßen Wand- oder Deckendurchführung 100 eine Montage eines Ansaugpunkts für ein Ansaugpartikelerkennungssystem von der Sichtseite 311 einer wand- oder deckenartigen Raumstruktur 310 ausgehend realisieren, ohne dass Zugriff auf die Rückseite 312 benötigt wird. Die Ausgestaltungen sind jeweils einfach konstruiert und daher unkompliziert und kostengünstig herzustellen und/oder fehlerfrei zu montieren. Einer durch ein gestauchtes und/oder gebogenes Schlauchende 200 ausgeübten Gegenkraft kann jeweils mittels einer Anpresskraft F_{A}, welche aus der Federkraft F der einen oder mehreren als Spiralfeder, Blattfeder oder Spreizfeder ausgebildeten Federn 121 resultiert, entgegengewirkt werden, um zu verhindern, dass die Wand- oder Deckendurchführung 100 aus der Durchgangsöffnung 320 heraus "gedrückt" wird. Hierzu ist die Federkraft F unter Beachtung der Gegenkraft auszulegen. Zusätzlich oder optional lässt sich mittels der Anpresskraft F_{A} die Dichtigkeit der Verbindung des ersten Leitungsendes 111 mit dem Rohr- oder Schlauchende 200 erhöhen.

### Bezugszeichenliste:

- 100: Wand- oder Deckendurchführung
- 110: Leitungsabschnitt
- 111: erstes Leitungsende
- 112: zweites Leitungsende
- 113: Ansaugöffnung
- 114: Kragenabschnitt
- 115: Reduzierungsmittel
- 120: Befestigungsmittel
- 121: Feder
- 121a: untere Federreihe
- 121b: obere Federreihe
- 122: Rückhaltebügel
- 123: erster Schenkel
- 124: zweiter Schenkel
- 200: Rohr- oder Schlauchende
- 210: Rohr- und/oder Schlauchsystem
- 220: Zuleitungsrohr
- 230: T-Stück
- 240: Ansaugschlauch
- 300: Prüfumgebung
- 310: wand- oder deckenartige Raumstruktur
- 310a: wand- oder deckenartige Raumstruktur mit höherer Wandstärke
- 311: Sichtseite
- 312: Rückseite
- 320: Durchgangsöffnung
- F: Federkraft
- F_{A}: Anpresskraft
- L₁: Länge des ersten Schenkels
- L₂: Länge des zweiten Schenkels

## Patentansprüche

1. Ansaugpartikelerkennungssystem mit einer Wand- oder Deckendurchführung (100), die ein Rohr- oder Schlauchende (200) des Ansaugpartikelerkennungssystems fluidleitend mit einer Prüfumgebung (300) verbindet, die Wand- oder Deckendurchführung (100) mit
- einem Leitungsabschnitt (110), der ein erstes Leitungsende (111) zur fluidleitenden Verbindung mit dem Rohr- oder Schlauchende (200) des Ansaugpartikelerkennungssystems sowie ein, dem ersten Leitungsende (111) gegenüberliegend angeordnetes zweites Leitungsende (112) aufweist, wobei das zweite Leitungsende (112) mit einer Ansaugöffnung (113) ausgebildet ist,
- einem Befestigungsmittel (120) zur Fixierung der Wand- oder Deckendurchführung (100) innerhalb einer Durchgangsöffnung (320) einer wand- oder deckenartigen Raumstruktur (310), wobei die wand-oder deckenartige Raumstruktur (310) eine einer Prüfumgebung (300) zugewandte Sichtseite (311) und eine der Prüfumgebung (300) abgewandte Rückseite (312) aufweist und
- einem flanschartigen Kragenabschnitt (114), welcher sich ausgehend von dem zweiten Leitungsende (112) in radialer Richtung erstreckt,
wobei das Befestigungsmittel (120) eine oder mehrere auslenkbare Federn (121) aufweist und die Wand- oder Deckendurchführung (100) als integrales Bauteil, zumindest einstückig mit dem Leitungsabschnitt (110), dem Kragenabschnitt (114) und der Ansaugöffnung (113) ausgebildet ist, **dadurch gekennzeichnet, dass** mittels der einen oder den mehreren Federn (121) in einer mit einem Rohr- oder Schlauchende (200) des Ansaugpartikelerkennungssystems fluidleitend verbundenen Betriebsstellung der Wand- oder Deckendurchführung (100) eine orthogonal zu dem Kragenabschnitt (114), in Richtung des zweiten Leitungsendes (112) gerichtete Federkraft (F) auf die Rückseite (312) der wand- oder deckenartigen Raumstruktur (310) ausübbar ist.

2. Ansaugpartikelerkennungssystem nach Anspruch 1,
**dadurch gekennzeichnet, dass**
die eine oder die mehreren Federn (121) zur Führung der Wand- oder Deckendurchführung (100) durch die Durchgangsöffnung (320) in eine an dem Leitungsabschnitt (110) anliegende und/oder parallel zu dem Leitungsabschnitt (110) verlaufende Führungsstellung auslenkbar sind.

3. Ansaugpartikelerkennungssystem nach Anspruch 1 oder 2,
**dadurch gekennzeichnet, dass**
mittels der einen oder den mehreren Federn (121) in einer mit einem Rohr- oder Schlauchende (200) des Ansaugpartikelerkennungssystems fluidleitend verbundenen Betriebsstellung der Wand- oder Deckendurchführung (100) eine Anpresskraft (F_{A}) auf dieses Rohr- oder Schlauchende (200) ausübbar ist, wobei die Anpresskraft (F_{A}) aus der in Richtung des zweiten Leitungsendes (112) gerichteten Federkraft (F) resultiert.

4. Ansaugpartikelerkennungssystem nach einem der vorhergehenden Ansprüche,
**dadurch gekennzeichnet, dass**
ein Reduzierungsmittel (115) zur Reduzierung der Querschnittsfläche bzw. des Durchmessers der Ansaugöffnung (113) mit dem Kragenabschnitt (114) verbunden ist.

5. Ansaugpartikelerkennungssystem nach einem der vorhergehenden Ansprüche,
**dadurch gekennzeichnet, dass**
mehrere Federn (121) jeweils paarweise, einander gegenüberliegend angeordnet sind.

6. Ansaugpartikelerkennungssystem nach einem der vorhergehenden Ansprüche,
**dadurch gekennzeichnet, dass**
mindestens eine der einen oder der mehreren Federn (121) als Spiralfeder mit einem jeweiligen Rückhaltebügel (122) ausgebildet ist.

7. Ansaugpartikelerkennungssystem nach einem der vorhergehenden Ansprüche,
**dadurch gekennzeichnet, dass**
mindestens eine der einen oder der mehreren Federn (121) als gebogene oder gekrümmte Blattfeder mit einem ersten Schenkel (123), welcher dem ersten Leitungsende (111) des Leitungsabschnitts (110) zugeordnet ist und einem zweiten Schenkel (124), welcher dem zweiten Leitungsende (112) des Leitungsabschnitts (110) zugeordnet ist, ausgebildet ist.

8. Ansaugpartikelerkennungssystem nach einem der Ansprüche 1 - 7,
**dadurch gekennzeichnet, dass**
mindestens eine der einen oder mehreren Federn (121) als radial von dem Leitungsabschnitt (110) abgespreizte Spreizfeder ausgebildet ist.

9. Verwendung eines eine oder mehrere Federn (121) aufweisenden Befestigungsmittels (120) zur Fixierung einer Wand- oder Deckendurchführung (100) für ein Ansaugpartikelerkennungssystemnach einem der Ansprüche 1 - 8, innerhalb einer Durchgangsöffnung (320) einer wand- oder deckenartigen Raumstruktur (310), wobei die wand- oder deckenartige Raumstruktur (310) eine einer Prüfumgebung (300) zugewandte Sichtseite (311) und eine der Prüfumgebung (300) abgewandte Rückseite (312) aufweist,
**dadurch gekennzeichnet, dass**
die Wand- oder Deckendurchführung (100) einen Leitungsabschnitt (110) mit einem ersten Leitungsende (111), welches fluidleitend mit einem Rohr- oder Schlauchende (200) des Ansaugpartikelerkennungssystems verbunden wird und einen Kragenabschnitt (114) aufweist, welcher Kragenabschnitt (114) sich ausgehend von einem zweiten Leitungsende (112) des Leitungsabschnitts (110) in radialer Richtung erstreckt, wobei die wand- oder deckenartige Raumstruktur (310) zwischen der einen oder den mehreren Federn (121) und dem Kragenabschnitt (114) angeordnet wird und die eine oder die mehreren Federn (121) zur Fixierung eine Federkraft (F) orthogonal zu dem Kragenabschnitt (114) auf die Rückseite (312) der wand- oder deckenartigen Raumstruktur (310) ausüben, sodass der flanschartige Kragenabschnitt (114) an eine gegenüberliegende Sichtseite (311) der wand- oder deckenartigen Raumstruktur (310) herangezogen wird.

10. Verwendung eines Befestigungsmittels (120) nach Anspruch 9,
**dadurch gekennzeichnet, dass**
das erste Leitungsende (111) mittels einer Steckverbindung oder einer Schlauchtülle mit dem Rohr- oder Schlauchende (200) des Ansaugpartikelerkennungssystems verbunden wird.

11. Verwendung eines Befestigungsmittels (120) nach einem der Ansprüche 9 oder 10,
**dadurch gekennzeichnet, dass**
die eine oder die mehreren Federn (121) des Befestigungsmittels (120) eine aus einer Federkraft (F) resultierende Anpresskraft (F_{A}) auf das Rohr- oder Schlauchende (200) ausüben.

12. Montageverfahren zur Fixierung einer Wand- oder Deckendurchführung (100) für ein Ansaugpartikelerkennungssystem, nach einem der Ansprüche 1 - 8, innerhalb einer Durchgangsöffnung (320) einer wand-oder deckenartigen Raumstruktur (310) mit einer Prüfumgebung (300) zugewandten Sichtseite (311) und einer der Prüfumgebung (300) abgewandten Rückseite (312), wobei
- in einem ersten Schritt ein rückseitig, hinter der wand- oder deckenartigen Raumstruktur (310), angeordnetes Rohr- und/oder Schlauchsystem (210) des Ansaugpartikelerkennungssystems bereitgestellt wird,
- in einem zweiten, auf den ersten Schritt folgenden, Schritt ein aus der Durchgangsöffnung (320) herausragendes Schlauchende (200) des Rohr- und/oder Schlauchsystems mit einem ersten Leitungsende (111) eines Leitungsabschnitts (110) der Wand- oder Deckendurchführung (100) fluidleitend verbunden wird, und
- in einem dritten, auf den zweiten Schritt folgenden, Schritt die Wand-oder Deckendurchführung (100) mittels eines eine oder mehrere Federn (121) aufweisenden Befestigungsmittels (120) innerhalb der Durchgangsöffnung (320) fixiert wird, wobei die eine oder die mehreren Federn (121) in eine Führungsstellung ausgelenkt werden und der Leitungsabschnitt (110) der Wand- oder Deckendurchführung (100) in die Durchgangsöffnung (320) eingeführt wird, sodass die eine oder die mehreren Federn (121) auf der Rückseite (312) der wand-oder deckenartigen Raumstruktur (310) angeordnet sind, wobei mittels der einen oder den mehreren Federn (121) eine orthogonal zu dem Kragenabschnitt (114), in Richtung des zweiten Leitungsendes (112) gerichtete Federkraft (F) auf die Rückseite (312) der wand- oder deckenartigen Raumstruktur (310) ausübbar ist und ein an einem zweiten Leitungsende (112) des Leitungsabschnitts (110) angeordneter Kragenabschnitt (114), auf der Sichtseite (311) der wand- oder deckenartigen Raumstruktur (310) angeordnet ist, sodass eine von dem Kragenabschnitt (114) eingefasste Ansaugöffnung (113) fluidleitend in die Prüfumgebung (300) weist, und wobei
- das aus der Durchgangsöffnung (320) herausragende Schlauchende (200) während des Einführens des Leitungsabschnitts (110) in die Durchgangsöffnung (320) zur Erzeugung einer die Dichtigkeit der fluidleitenden Verbindung zwischen dem Schlauchende (200) und dem ersten Leitungsende (111) erhöhenden Gegenkraft gestaucht und/oder gebogen wird.

13. Montageverfahren nach Anspruch 12,
**dadurch gekennzeichnet, dass**
die eine oder die mehreren Federn (121) in eine an dem Leitungsabschnitt (110) der Decken- oder Wanddurchführung (320) anliegende und/oder parallel zu dem Leitungsabschnitt (110) verlaufende Führungsstellung ausgelenkt werden.

## Claims

1. A suction particle detection system having a wall or ceiling feedthrough (100) that connects a pipe or hose end (200) of the suction particle detection system to a test environment (300) in a fluid-conducting manner, the wall or ceiling feedthrough (100) having
- a line section (110) which has a first line end (111) for the fluid-conducting connection to the pipe or hose end (200) of the suction particle detection system and a second line end (112) arranged opposite to the first line end (111), wherein the second line end (112) is formed having a suction opening (113),
- a fastening means (120) for fixing the wall or ceiling feedthrough (100) within a through opening (320) of a wall or ceiling-like room structure (310), wherein the wall-like or ceiling-like room structure (310) has a visible side (311) facing toward a test environment (300) and a rear side (312) facing away from the test environment (300), and
- a flange-like collar section (114) which, starting from the second line end (112), extends in the radial direction, wherein
the fastening means (120) comprises one or more deflectable springs (121) and the wall or ceiling feedthrough (100) is formed as an integral component, at least in one piece with the line section (110), the collar section (114), and the suction opening (113),
**characterized in that**
by means of the one or more springs (121), in an operating position of the wall or ceiling duct (100) connected to a pipe or hose end (200) of the suction particle detection system in a fluid-conducting manner, a spring force (F) oriented orthogonally to the collar section (114) in the direction of the second line end (112) can be exerted on the rear side (312) of the wall-like or ceiling-like room structure (310).

2. The suction particle detection system according to claim 1,
**characterized in that**
the one or more springs (121) for guiding the wall or ceiling feedthrough (100) through the through opening (320) are deflectable into a guide position resting against the line section (110) and/or extending in parallel to the line section (110).

3. The suction particle detection system according to claim 1 or 2,
**characterized in that**
a pressing force (F_{A}) can be exerted on the pipe or hose end (200) by means of the one or more springs (121), in an operating position of the wall or ceiling duct (100) connected to a pipe or hose end (200) of the suction particle detection system in a fluid-conducting manner, wherein the pressing force (F_{A}) results from the spring force (F) oriented in the direction of the second line end (112).

4. The suction particle detection system according to any one of the preceding claims,
**characterized in that**
a reducing means (115) for reducing the cross-sectional area or the diameter of the suction opening (113) is connected to the collar section (114).

5. The suction particle detection system according to any one of the preceding claims,
**characterized in that**
multiple springs (121) are arranged in pairs, opposite to one another.

6. The suction particle detection system according to any one of the preceding claims,
**characterized in that**
at least one of the one or more springs (121) is designed as a spiral spring having a respective retaining clip (122).

7. The suction particle detection system according to any one of the preceding claims,
**characterized in that**
at least one of the one or more springs (121) is designed as a bent or curved leaf spring having a first leg (123) which is associated with the first line end (111) of the line section (110) and a second leg (124) which is associated with the second line end (112) of the line section (110).

8. The suction particle detection system according to any one of claims 1 to 7,
**characterized in that**
at least one of the one or more springs (121) is designed as an expansion spring spread out radially from the line section (110).

9. A use of a fastening means (120) having one or more springs (121) for fixing a wall or ceiling feedthrough (100) for a suction particle detection system according to any one of claims 1 to 8, within a through opening (320) of a wall-like or ceiling-like room structure (310), wherein the wall-like or ceiling-like room structure (310) has a visible side (311) facing toward a test environment (300) and a rear side (312) facing away from the test environment (300),
**characterized in that**
the wall or ceiling feedthrough (100) has a line section (110) having a first line end (111), which is connected in a fluid-conducting manner to a pipe or hose end (200) of the suction particle detection system and has a collar section (114), which collar section (114) extends in the radial direction starting from a second line end (112) of the line section (110), wherein the wall-like or ceiling-like room structure (310) is arranged between the one or more springs (121) and the collar section (114) and the one or more springs (121) exert a spring force (F) orthogonally to the collar section (114) on the rear side (312) of the wall-like or ceiling-like room structure (310) for fixing, so that the flange-like collar section (114) is pulled toward an opposite visible side (311) of the wall-like or ceiling-like room structure (310).

10. The use of a fastening means (120) according to claim 9,
**characterized in that**
the first line end (111) is connected to the pipe or hose end (200) of the suction particle detection system by means of a plug connection or a hose nozzle.

11. The use of a fastening means (120) according to any one of claims 9 or 10,
**characterized in that**
the one or more springs (121) of the fastening means (120) exert a pressing force (F_{A}) resulting from a spring force (F) on the pipe or hose end (200).

12. An installation method for fixing a wall or ceiling feedthrough (100) for a suction particle detection system, in particular according to any one of claims 1 to 8, within a through opening (320) of a wall-like or ceiling-like room structure (310) having a visible side (311) facing toward a test environment (300) and a rear side (312) facing away from the test environment (300), wherein
- in a first step, a tube and/or hose system (210) of the suction particle detection system, arranged on the rear, behind the wall-like or ceiling-like room structure (310), is provided,
- in a second step following the first step, a hose end (200) of the tube and/or hose system protruding from the through opening (320) is connected in a fluid-conducting manner to a first line end (111) of a line section (110) of the wall or ceiling feedthrough (100), and
- In a third step following the second step, the wall or ceiling feedthrough (100) is fixed by means of a fastening means (120) having one or more springs (121) within the through opening (320), wherein the one or more springs (121) are deflected into a guide position and the line section (110) of the wall or ceiling feedthrough (100) is introduced into the through opening (320), so that the one or more springs (121) are arranged on the rear side (312) of the wall-like or ceiling-like room structure (310), wherein by means of the one or more springs (121) a spring force (F) oriented orthogonally to the collar section (114) in the direction of the second line end (112) can be exerted on the rear side (312) of the wall-like or ceiling-like room structure (310) and a collar section (114) arranged on a second line end (112) of the line section (110) is arranged on the visible side (311) of the wall-like or ceiling-like room structure (310), so that a suction opening (113) enclosed by the collar section (114) points in a fluid-conducting manner into the test environment (300), and wherein
- the hose end (200) protruding from the through opening (320) is compressed and/or bent during the introduction of the line section (110) into the through opening (320) to create a counter force increasing the tightness of the fluid-conducting connection between the pipe or hose end (200) and the first line end (111).

13. The installation method according to claim 12,
**characterized in that**
the one or more springs (121) are deflected into a guide position resting against the line section (110) of the ceiling or wall feedthrough (320) and/or extending in parallel to the line section (110).

## Revendications

1. Système de détection de particules aspirées avec une traversée de mur ou de plafond (100) qui relie par conduction de fluide une extrémité de tube ou de tuyau (200) du système de détection de particules aspirées à un environnement de contrôle (300), la traversée de mur ou de plafond (100) comprenant
- une section de conduite (110) qui présente une première extrémité de conduite (111) pour la liaison par conduction de fluide avec l'extrémité de tube ou de tuyau (200) du système de détection de particules aspirées ainsi qu'une deuxième extrémité de conduite (112) agencée à l'opposé de la première extrémité de conduite (111), la deuxième extrémité de conduite (112) étant réalisée avec une ouverture d'aspiration (113),
- un moyen de fixation (120) pour fixer la traversée de mur ou de plafond (100) à l'intérieur d'une ouverture de passage (320) d'une structure spatiale (310) de type mur ou plafond, la structure spatiale (310) de type mur ou plafond présentant un côté visible (311) tourné vers un environnement de contrôle (300) et un côté arrière (312) détourné de l'environnement de contrôle (300) et
- une section de collerette (114) de type bride qui s'étend dans la direction radiale à partir de la deuxième extrémité de conduite (112),
le moyen de fixation (120) présentant un ou plusieurs ressorts (121) pouvant être déviés et la traversée de mur ou de plafond (100) étant réalisée sous forme de composant intégral, au moins d'une seule pièce avec la section de conduite (110), la section de collerette (114) et l'ouverture d'aspiration (113),
**caractérisé en ce**
**qu'**au moyen des un ou plusieurs ressorts (121) dans une position de fonctionnement de la traversée de mur ou de plafond (100) reliée par conduction de fluide à une extrémité de tube ou de tuyau (200) du système de détection de particules aspirées, une force de ressort (F) dirigée orthogonalement à la section de collerette (114), en direction de la deuxième extrémité de conduite (112), peut être exercée sur le côté arrière (312) de la structure spatiale (310) de type mur ou plafond.

2. Système de détection de particules aspirées selon la revendication 1,
**caractérisé en ce que**
les un ou plusieurs ressorts (121) peuvent être déviés pour guider la traversée de mur ou de plafond (100) à travers l'ouverture de passage (320) dans une position de guidage adjacente à la section de conduite (110) et/ou parallèle à la section de conduite (110).

3. Système de détection de particules aspirées selon la revendication 1 ou 2,
**caractérisé en ce**
**qu'**au moyen des un ou plusieurs ressorts (121) dans une position de fonctionnement de la traversée de mur ou de plafond (100) reliée par conduction de fluide à une extrémité de tube ou de tuyau (200) du système de détection de particules aspirées, une force de pression (F_{A}) peut être exercée sur cette extrémité de tube ou de tuyau (200), la force de pression (F_{A}) résultant de la force de ressort (F) dirigée en direction de la deuxième extrémité de conduite (112).

4. Système de détection de particules aspirées selon l'une quelconque des revendications précédentes,
**caractérisé en ce**
**qu'**un moyen de réduction (115) pour réduire la surface de section transversale ou le diamètre de l'ouverture d'aspiration (113) est relié à la section de collerette (114) .

5. Système de détection de particules aspirées selon l'une quelconque des revendications précédentes,
**caractérisé en ce que**
plusieurs ressorts (121) sont agencés par paires, opposés les uns aux autres.

6. Système de détection de particules aspirées selon l'une quelconque des revendications précédentes,
**caractérisé en ce**
**qu'**au moins un des un ou plusieurs ressorts (121) est réalisé sous forme de ressort en spirale avec un étrier de retenue (122) respectif.

7. Système de détection de particules aspirées selon l'une quelconque des revendications précédentes,
**caractérisé en ce**
**qu'**au moins un des un ou plusieurs ressorts (121) est réalisé sous forme de ressort à lames courbé ou incurvé avec une première branche (123) associée à la première extrémité de conduite (111) de la section de conduite (110) et une deuxième branche (124) associée à la deuxième extrémité de conduite (112) de la section de conduite (110).

8. Système de détection de particules aspirées selon l'une quelconque des revendications 1 à 7,
**caractérisé en ce**
**qu'**au moins un des un ou plusieurs ressorts (121) est réalisé sous forme de ressort d'écartement écarté radialement de la section de conduite (110).

9. Utilisation d'un moyen de fixation (120) présentant un ou plusieurs ressorts (121) pour la fixation d'une traversée de mur ou de plafond (100) pour un système de détection de particules aspirées selon l'une quelconque des revendications 1 à 8, à l'intérieur d'une ouverture de passage (320) d'une structure spatiale (310) de type mur ou plafond, la structure spatiale (310) de type mur ou plafond présentant un côté visible (311) tourné vers un environnement de contrôle (300) et un côté arrière (312) détourné de l'environnement de contrôle (300),
**caractérisée en ce que**
la traversée de mur ou de plafond (100) présente une section de conduite (110) avec une première extrémité de conduite (111) qui est reliée par conduction de fluide à une extrémité de tube ou de tuyau (200) du système de détection de particules aspirées et une section de collerette (114), laquelle section de collerette (114) s'étend dans la direction radiale à partir d'une deuxième extrémité de conduite (112) de la section de conduite (110), la structure spatiale (310) de type mur ou plafond étant agencée entre les un ou plusieurs ressorts (121) et la section de collerette (114), et les un ou plusieurs ressorts (121) exerçant une force de ressort (F) orthogonalement à la section de collerette (114) sur le côté arrière (312) de la structure spatiale (310) de type mur ou plafond pour la fixation, de telle sorte que la section de collerette (114) de type bride est attirée vers un côté visible opposé (311) de la structure spatiale (310) de type mur ou plafond.

10. Utilisation d'un moyen de fixation (120) selon la revendication 9,
**caractérisée en ce que**
la première extrémité de conduite (111) est reliée à l'extrémité de tube ou de tuyau (200) du système de détection de particules aspirées au moyen d'une liaison enfichable ou d'un embout de tuyau.

11. Utilisation d'un moyen de fixation (120) selon l'une quelconque des revendications 9 ou 10,
**caractérisée en ce que**
les un ou plusieurs ressorts (121) du moyen de fixation (120) exercent une force de pression (F_{A}) résultant d'une force de ressort (F) sur l'extrémité de tube ou de tuyau (200).

12. Procédé de montage pour la fixation d'une traversée de mur ou de plafond (100) pour un système de détection de particules aspirées, selon l'une quelconque des revendications 1 à 8, à l'intérieur d'une ouverture de passage (320) d'une structure spatiale (310) de type mur ou plafond avec un côté visible (311) tourné vers l'environnement de contrôle (300) et un côté arrière (312) détourné de l'environnement de contrôle (300),
- dans une première étape, un système de tube et/ou de tuyau (210) du système de détection de particules aspirées agencé du côté arrière, derrière la structure spatiale (310) de type mur ou plafond, étant fourni,
- dans une deuxième étape, suivant la première étape, une extrémité de tuyau (200) du système de tube et/ou de tuyau, dépassant de l'ouverture de passage (320), étant reliée par conduction de fluide à une première extrémité de conduite (111) d'une section de conduite (110) de la traversée de mur ou de plafond (100), et
- dans une troisième étape suivant la deuxième étape, la traversée de mur ou de plafond (100) étant fixée à l'intérieur de l'ouverture de passage (320) au moyen d'un moyen de fixation (120) présentant un ou plusieurs ressorts (121), les un ou plusieurs ressorts (121) étant déviés dans une position de guidage et la section de conduite (110) de la traversée de mur ou de plafond (100) étant introduite dans l'ouverture de passage (320), de telle sorte que les un ou plusieurs ressorts (121) sont agencés sur le côté arrière (312) de la structure spatiale (310) de type mur ou plafond, une force de ressort (F) dirigée orthogonalement à la section de collerette (114), en direction de la deuxième extrémité de conduite (112), pouvant être exercée sur le côté arrière (312) de la structure spatiale (310) de type mur ou plafond au moyen des un ou plusieurs ressorts (121), et une section de collerette (114) agencée à une deuxième extrémité de conduite (112) de la section de conduite (110), étant agencée sur le côté visible (311) de la structure spatiale (310) de type mur ou plafond, de telle sorte qu'une ouverture d'aspiration (113) bordée par la section de collerette (114) est orientée par conduction de fluide dans l'environnement de contrôle (300),
- l'extrémité de tuyau (200) dépassant de l'ouverture de passage (320) étant comprimée et/ou pliée pendant l'introduction de la section de conduite (110) dans l'ouverture de passage (320) pour produire une force antagoniste augmentant l'étanchéité de la liaison par conduction de fluide entre l'extrémité de tuyau (200) et la première extrémité de conduite (111).

13. Procédé de montage selon la revendication 12,
**caractérisé en ce que**
les un ou plusieurs ressorts (121) sont déviés dans une position de guidage adjacente à la section de conduite (110) de la traversée de plafond ou de mur (320) et/ou parallèle à la section de conduite (110).
